# EUROPEAN PATENT SPECIFICATION

(11) **EP 2 690 769 B1**
(45) Date of publication and mention of the grant of the patent: **01.02.2017**
(21) Application number: 12760095.5
(22) Date of filing: 10.02.2012
(51) Int. Cl.: H02M 1/08, H02M 3/28, H02M 3/335, H02M 1/32, H02M 1/00

(54) **POWER SUPPLY CIRCUIT**
STROMVERSORGUNGSSCHALTUNG
CIRCUIT D'ALIMENTATION ÉLECTRIQUE

(30) Priority: 22.03.2011 JP 2011062654
(43) Date of publication of application: 29.01.2014
(73) Proprietor: Daikin Industries, Ltd., Osaka-shi, Osaka 530-8323 (JP)
(72) Inventor: ISHIZEKI, Shinichi, Sakai-shi Osaka 591-8511 (JP); SATOU,Toshiaki, Kusatsu-shi Shiga 525-8526 (JP)
(74) Representative: Hoffmann Eitle
(86) International application number: PCT/JP2012/053047
(87) International publication number: WO 2012/127926

(56) References cited:
- JP-A- 8 172 772
- JP-A- 10 201 232
- JP-A- H09 135 574
- JP-A- H10 201 232
- JP-A- H11 178 356
- JP-A- 2003 125 588
- JP-A- 2010 183 751
- JP-A- 2011 036 000

## Description

### TECHNICAL FIELD

The present invention relates to a power supply circuit using a switching power supply.

### BACKGROUND ART

In a power conversion apparatus having a switching element, such as an inverter circuit, a power supply circuit for giving a driving signal (DC voltage) to a control terminal of a switching element needs to be provided. In addition, in order to stably operate the switching element, stable voltage needs to be given from the power supply circuit. If this voltage abnormally drops by a factor such as power supply interruption for a short time due to lightning strike or the like, a stable operation of the switching element is not ensured. In a control terminal (gate) of an IGBT (Insulated Gate Bipolar Transistor) which is a typical switching element, a minimum gate voltage threshold value (Vth) needed for turning on the element is a voltage of about 6V, for example. It is noted that generally, in the case where gate voltage is low, saturation voltage between the collector and the emitter is high, so that current cannot be applied sufficiently and loss increases. Therefore, driving voltage control is performed such that normally, the gate voltage exceeding about 10V is given to perform ON operation, and when the element is to be turned off, the gate voltage is made to be almost 0V.

In other words, a range of about 6 to 10V of the gate voltage is an unstable operation region. Therefore, if gate voltage for driving an IGBT drops during operation of the switching element, abnormal heat generation or erroneous operation of the IGBT occurs. In the case of an inverter circuit, if the IGBT does not operate in a supposed manner, such a trouble that short circuit in the power supply cannot be detected or heat generation becomes excessively large, can occur.

Meanwhile, due to breakdown of the power supply circuit, or the like, the gate voltage can become excessively large. If the gate voltage exceeding the gate breakdown voltage of the IGBT is given, the IGBT can be broken.

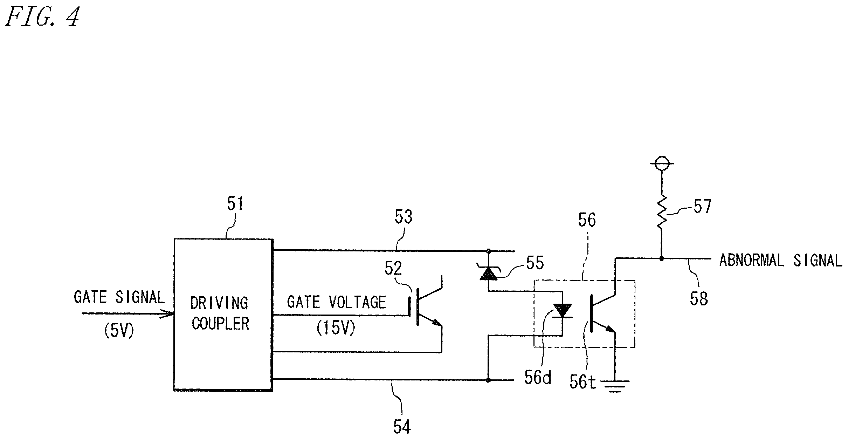

Accordingly, it has been proposed that means for judging abnormality of the gate voltage is provided and thereby the IGBT is turned off in the case of abnormality (for example, see Patent Literature 1). In addition, though different from this, FIG. 4 shows a circuit example for judging abnormality of the supply voltage for gate voltage, which is implemented by the present applicant for the same purpose as in the above proposal. In FIG. 4, in accordance with a gate signal (for example, a signal indicating 5V for an ON instruction and 0V for an OFF instruction) given from a CPU (not shown), a photocoupler 51 for driving a gate (hereinafter, abbreviated as a driving coupler) gives gate voltage (for example, 15V for ON instruction) to an IGBT 52. For the driving coupler 51, control supply voltage as a base for the gate voltage is supplied between two electric paths 53 and 54.

In addition, a series unit composed of a zener diode 55 and a light emitting diode 56d provided on the input side of the photocoupler 56 is connected between the two electric paths 53 and 54. A phototransistor 56t provided on the output side of the photocoupler 56 is grounded for the emitter thereof, and an electric path 58 connected to the collector of the phototransistor 56t is pulled up via a resistor 57.

When the voltage between the electric paths 53 and 54 is normal, the zener diode 55 becomes conductive, so that the light emitting diode 56d lights up and the photocoupler 56 is turned on. Therefore, the potential of the electric path 58 becomes L level. When the voltage between the two electric paths 53 and 54 drops, the zener diode 55 becomes non-conductive, so that the light emitting diode 56d is extinguished and the photocoupler 56 is turned off. Therefore, the potential of the electric path 58 becomes H level and this is outputted as an abnormal signal. By stopping (outputting 0V) the gate signal output from a CPU based on the abnormal signal, the IGBT 52 is turned off, whereby the IGBT 52 can be prevented from being used in the state where the control voltage has dropped.

Further, in patent document 2 there is described a control circuit for inverter device. To apply a constant voltage which is most suitable for an induction motor regarding of fluctuation in input voltage to prevent a motor from becoming unstable. This is achieved by exercising control from an estimated primary-side supply voltage of an inverter device in a way that the relation between the upper frequency and the output voltage of the inverter device are constant.

In patent document 3 there is described a power transformer and power conversion equipment. A power transformer has a primary winding to which a predetermined voltage is applied, a secondary winding in which a converted voltage is generated, a winding shaft over which the primary winding and secondary winding are wound, and an insulating member which is provided at the peripheral wall of the winding shaft.

In patent document 4, there is described a multi-output type power supply unit able to suppress the increase of an input voltage of a regulator circuit caused by a surge voltage by suppressing the reduction of power converting efficiency of a multi-output power supply unit to a minimum.

In patent document 5, there is described a controller for electric vehicle capable to facilitate manufacture of a transformer and attain size reduction by monitoring the secondary winding of an isolation transformer for driving an insulation gate bipolar transistor in an inverter circuit, and controlling main voltage to function as a floating power source.

### CITATION LIST

### PATENT LITERATURE

Patent literature 1: Japanese Laid-Open Patent Publication No. 2003-125588 (FIG. 14)
Patent document 2: Patent Abstracts of Japan JP H09 135574 A
Patent document 3: Patent Abstracts of Japan JP 2010183751 A
Patent document 4: Patent Abstracts of Japan JP H10 201232 A
Patent document 2: Patent Abstracts of Japan JP H11 178356 A

### SUMMARY OF INVENTION10201232

### (PROBLEMS TO BE SOLVED BY THE INVENTION)

Generally, in an inverter circuit, a plurality of switching elements are used. Here, the case of using an IGBT as a switching element will be described as an example. In the case of IGBT, a common power supply circuit cannot be used for driving the gates of the respective IGBTs because of the differences in arms and reference potentials, and a plurality of power supply circuits insulated from each other are needed. Therefore, in order to turn off each of the plurality of IGBTs when the corresponding control voltage drops, in the power supply circuit of Patent Literature 1, a circuit for abnormality judgment needs to be provided for each IGBT. Also in the power supply circuit in FIG. 4, a circuit for abnormality judgment needs to be provided at least for each power supply circuit (the electric paths 53 and 54). Thus, in such conventional power supply circuits, since a circuit for abnormality judgment needs to be provided for each power supply circuit or each IGBT, the number of necessary components to be mounted increases. As a result, the circuit configuration is complicated, leading to increase in the size of a board or the cost.

It is noted that control voltage rise can occur contrary to the above control voltage drop, and also in this case, a similar problem arises.

In view of such conventional problems, an object of the present invention is to provide a power supply circuit capable of reliably detecting abnormality of voltage with a simple circuit configuration.

### (SOLUTION TO THE PROBLEMS)

(1) The present invention is a power supply circuit that supplies control supply voltage for giving a control signal to a switching element, the power supply circuit including the features of claim 1 or 4.

In the power supply circuit configured as described in claim 1, when the output voltage that should be stable owing to the feedback control becomes an abnormal value, output voltages of the other output circuits also become abnormal values. Therefore, without monitoring the voltage of each output circuit, voltage monitoring of the entire switching power supply can be performed based on the output voltage of the output circuit used for the feedback control. Therefore, based on the output voltage, the switching power supply itself or input to the switching power supply is judged to have some kind of abnormality, and output of the control signal to the switching element is stopped, whereby the switching element can be protected.

In the power supply circuit according to claim 1, the monitoring circuit keeps a state that the subject voltage based on the output voltage of the output circuit is higher than the reference voltage based on the constant voltage when the control supply voltage is normal, whereas the monitoring circuit outputs a signal for stopping output of the control signal, to a control apparatus for the switching element, when the subject voltage lowers to thereby cause a state that the subject voltage is lower than the reference voltage.

That is, when the output voltage that should be stable owing to the feedback control abnormally drops, output voltages of the other output circuits also drop. Therefore, based on the output voltage, the switching element can be protected.

In this case, even if input voltage to the regulator circuit drops, since the regulator circuit essentially outputs constant voltage reduced from the input voltage, the regulator circuit continues to output the constant voltage until the input voltage becomes lower than the constant voltage, and the reference voltage does not vary. Therefore, when the subject voltage is lower than the reference voltage, the switching power supply itself or the input of the switching power supply is judged to be in some kind of abnormal state, and output of the control signal to the switching element is stopped, whereby the switching element can be protected.

In the power supply circuit according to claim 4 the monitoring circuit keeps a state that the subject voltage based on the output voltage of the output circuit is lower than the reference voltage based on the constant voltage when the control supply voltage is normal, whereas the monitoring circuit outputs a signal for stopping output of the control signal, to a control apparatus for the switching element, when the subject voltage increases to thereby cause a state that the subject voltage is lower than the reference voltage.

In this case, even if input voltage to the regulator circuit rises, the regulator circuit continues to output the constant voltage, and the reference voltage does not vary. Therefore, when the subject voltage is higher than the reference voltage, the switching power supply itself or input to the switching power supply is judged to be in some kind of abnormal state, and output of the control signal to the switching element is stopped, whereby the switching element can be protected.

In the power supply circuit according to claim 2, the regulator circuit may be composed of regulators in a plurality of stages such that the later the stage is, the lower the constant voltage outputted from the stage is.

In this case, the regulators in later stages can maintain their output voltages even if the input voltages thereto is low. Therefore, a time can be easily secured until the output of the regulator in the last stage becomes lower than the constant voltage. That is, even if the output voltage of the switching power supply abnormally drops, the regulator in the last stage can keep its output of constant voltage for a comparatively long period after occurrence of the drop.

In the power supply circuit according to claim 3, the subject voltage becomes lower than the reference voltage before the control supply voltage for the switching element becomes lower than predetermined voltage that allows the switching element to normally operate.

Thus, the switching element can be prevented from performing abnormal operation before the monitoring circuit protects the switching element.

In the power supply circuit according to claim 5, the subject voltage and the reference voltage are voltages as seen from a common GND potential on the output side of the switching power supply.

In this case, the voltages of the two systems relative to the common GND potential can be directly used as the two inputs to the monitoring circuit, and do not need to be insulated from each other, whereby a circuit configuration is simplified.

In the power supply circuit according to claim 6, as the subject voltage and the reference voltage, a supply voltage for the control apparatus is voltage as seen from the GND potential.

In this case, the output of the monitoring circuit can be directly inputted to the control apparatus, and they do not need to be insulated from each other, whereby a circuit configuration is simplified.

In the power supply circuit according to claim 7, an output voltage of the regulator circuit may be used for the supply voltage for the control apparatus.

In this case, the supply voltage for the control apparatus becomes stable.

In the power supply circuit according to claim 8, the switching element may be a plurality of voltage-driving-type elements composing a power conversion circuit.

In this case, when the gate voltage as the control signal drops due to abnormal drop of the output voltage of the switching power supply, abnormal heat generation or switching malfunction of the voltage-driving-type elements such as IGBTs or MOSFETs can occur. However, by stopping supply of the gate voltage, such problems can be prevented from occurring.

### (ADVANTAGEOUS EFFECTS OF THE INVENTION)

According to the power supply circuit of the present invention, abnormality of voltage can be reliably detected with a simple circuit configuration, whereby switching elements can be protected.

### BRIEF DESCRIPTION OF DRAWINGS

FIG. 1 is a circuit diagram mainly showing a power supply circuit according to one embodiment of the present invention.
FIG. 2 is a diagram showing voltage variation in a regulator circuit and the like.
FIG. 3 is a diagram showing voltage variation in each section in FIG. 1 and variation in output of a monitoring circuit.
FIG. 4 is a conventional circuit example for judging abnormality of supply voltage for gate voltage.

### DESCRIPTION OF EMBODIMENTS

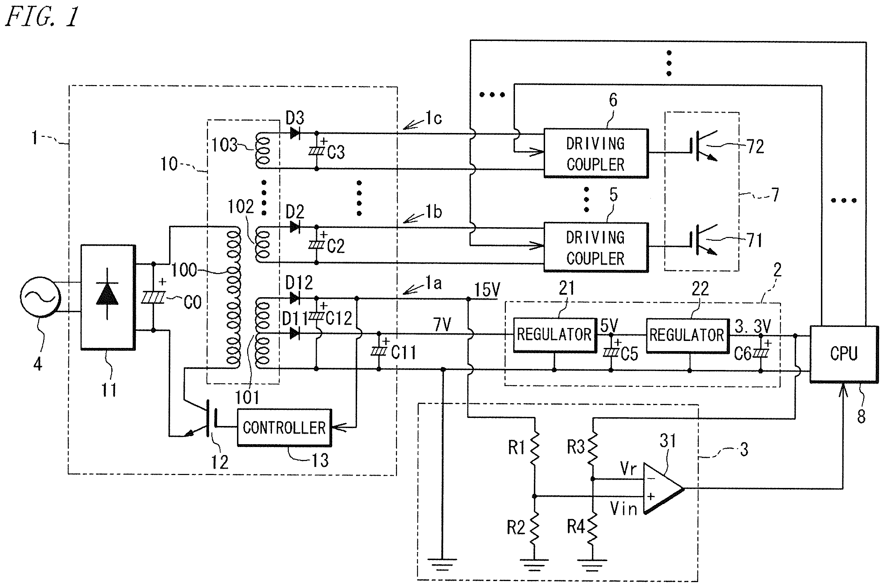

FIG. 1 is a circuit diagram mainly showing a power supply circuit according to one embodiment of the present invention. In FIG. 1, the power supply circuit includes, as main constituent components, a switching power supply 1, a regulator circuit 2, a monitoring circuit 3, and a control apparatus 8. The switching power supply 1 is composed of a switching transformer 10, a rectification circuit 11, a switching element (for example, IGBT) 12, a controller 13, smoothing capacitors C0, C11, C12, C2, and C3, and diodes D11, D12, D2, and D3, which are connected as shown in FIG. 1.

AC voltage supplied from a commercial AC power supply 4 is rectified in full-wave by the rectification circuit 11, and then smoothed by the smoothing capacitor C0. By the smoothed voltage, current flows to an input-side winding 100 of the switching transformer 10 via the switching element 12. The switching element 12 is controlled through PWM control by the controller 13, to perform high-frequency switching. By this switching, voltages are induced on a plurality of output-side windings 101 to 103 in accordance with their respective turn ratios. The induced voltages are respectively rectified and smoothed via the diodes D11, D12, D2, and D3 and the smoothing capacitors C11, C12, C2, and C3, thus forming output circuits 1a, 1b, and 1c. The winding 101 is a winding with a center tap, and the output circuit 1a outputs 15V and 7V, for example.

Although only two circuits are shown as the output circuits 1b and 1c, actually, a required number of circuits for switching elements as a load are provided. The output circuits 1b and 1c supply control supply voltages for giving control signals (gate voltages) to switching elements 71 and 72 which are IGBTs, to driving couplers (photocouplers for driving gates) 5 and 6. Gate signals as a logical base for the gate voltages are given from a CPU 8 as a control apparatus to the driving couplers 5 and 6.

The switching elements 71 and 72 compose a power conversion circuit 7 such as an inverter or a converter. Actually, switching elements are provided in a number corresponding to an applied circuit, and driving couplers are provided for the respective switching elements or a common driving coupler is provided for the elements whose operations are the same. It is noted that use of the switching elements is not limited to a power conversion circuit, but the switching elements may be used as other various switches. In addition, in the case where a condition such as common reference potential or necessary voltage is satisfied, the output circuit may be configured to output signals to a plurality of driving couplers. It is noted that the CPU 8 receives supply of power of 3.3V from the output of the regulator circuit 2, for example.

On the other hand, rated output voltage of 15V from the output circuit 1a is used for feedback control. That is, when the voltage that should be 15V becomes higher than 15V, the controller 13 operates so as to decrease the duty of the PWM control to decrease the output voltage of the switching transformer 10. To the contrary, when the voltage that should be 15V becomes lower than 15V, the controller 13 operates so as to increase the duty of the PWM control to increase the output voltage of the switching transformer 10. By thus performing feedback control, the voltage outputted from each output circuit of the switching power supply 1 is maintained so as not to largely deviate from a predetermined value. Particularly, the voltage of the output circuit 1a used for the feedback control is maintained within an extremely small variation range (for example, output of 15V is maintained within a range with an accuracy of ±0.25V. i.e., 14.75 to 15.25V).

To the contrary, if the voltage of the output circuit 1a is within the above variation range, the voltages of the other output circuits 1b and 1c are also maintained within a normal allowable range. In addition, if the voltage of the output circuit 1a which should be stable owing to the feedback control abnormally drops due to AC voltage drop or the like, the output voltages of the other output circuits 1b and 1c also drop. Therefore, without monitoring the voltage of each output circuit, voltage monitoring of the entire output of the switching power supply 1 can be performed based on the output voltage of the output circuit 1a used for the feedback control.

Accordingly, based on the voltage of the output circuit 1a, abnormal drop of the output voltage of the entire switching power supply 1 is monitored. A monitoring circuit 3 is a circuit for that purpose, and divides feedback voltage (voltage inputted to the controller 13) by resistors R1 and R2, for example, so that the resultant voltage is given to one of the input terminals of a comparator 31. This voltage is referred to as subject voltage Vin which is to be compared with reference voltage Vr described later.

On the other hand, the regulator circuit 2 is connected to a circuit for 7V in the output circuit 1a. The regulator circuit 2 is formed by pairing a regulator (three-terminal regulator) and an electrolytic capacitor and connecting two such pairs, i.e., connecting them in two stages. That is, a regulator 21 in the preceding stage reduces input voltage (7V) to constant voltage of 5V and outputs the constant voltage. This output is inputted to a regulator 22 in the subsequent stage via an electrolytic capacitor C5. The regulator 22 in the subsequent stage reduces input voltage (5V) to constant voltage of 3.3V and outputs the constant voltage. This output is given to the monitoring circuit 3 via an electrolytic capacitor C6. The monitoring circuit 3 divides the voltage of 3.3V by resistors R3 and R4, for example, and gives the divided voltage to the other one of the input terminals of the comparator 31. This voltage is referred to as reference voltage Vr.

It is noted that in the output circuit 1a, the common electric path for 7V and 15V is at a GND potential, and the subject voltage Vin and the reference voltage Vr are also voltages relative to the common GND potential. Therefore, the voltages of the two systems relative to the common GND potential can be directly used as the two inputs to the monitoring circuit 3, and do not need to be insulated from each other, whereby a circuit configuration is simplified. In addition, since the CPU 8 is also at the common GND potential, the circuit configuration is further simplified.

When the output voltage of the switching power supply 1 is normal, the division ratios according to the resistors R1 and R2 and the resistors R3 and R4 are set such that the subject voltage Vin is slightly higher than the reference voltage Vr. The output of the comparator 31 in this case is H level (normal), for example. The CPU 8 recognizes this output as indicating that the output voltage of the switching power supply 1 is normal.

Next, the operation performed when the output voltage of the switching power supply 1 abnormally drops due to power supply interruption for a short time or abnormality of the controller 13, will be described.

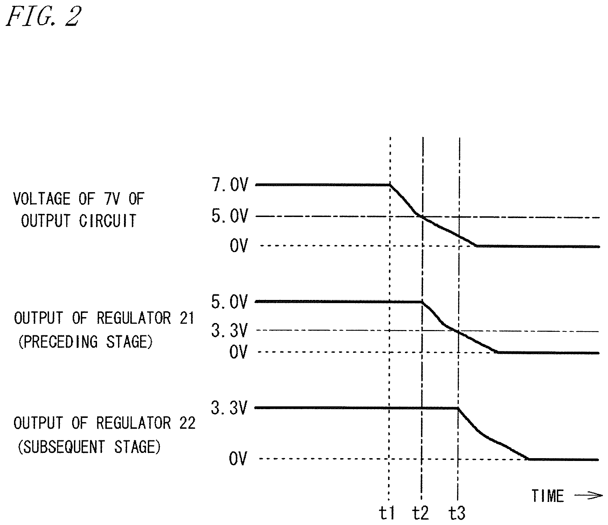

First, the operation of the regulator circuit 2 will be described. FIG. 2 is a diagram showing voltage variation in the regulator circuit 2. It is noted that normally, for each regulator, an input voltage range that allows required constant output voltage to be outputted is defined. Here, for simplifying the description, it will be assumed that if the input voltage is equal to or higher than the constant output voltage, the voltage output is allowed.

When abnormality occurs at a time t1, the voltage of 7V of the output circuit 1a gradually drops to be 0V eventually. The output of the regulator 21 in the preceding stage keeps 5V for a while even after the time t1, and then, after a time t2 when the voltage of the output circuit 1a becomes lower than 5V, gradually drops to be 0 eventually. The output of the regulator 22 in the subsequent stage keeps 3.3V for a while even after the time t2, and then, after a time t3 when the output voltage of the regulator 21 becomes lower than 3.3V, gradually drops to be 0 eventually.

As described above, the output of the regulator 22 in the subsequent stage can keep its output voltage of 3.3V which is constant voltage, after the time t1 when the abnormality occurs, until the time t3.

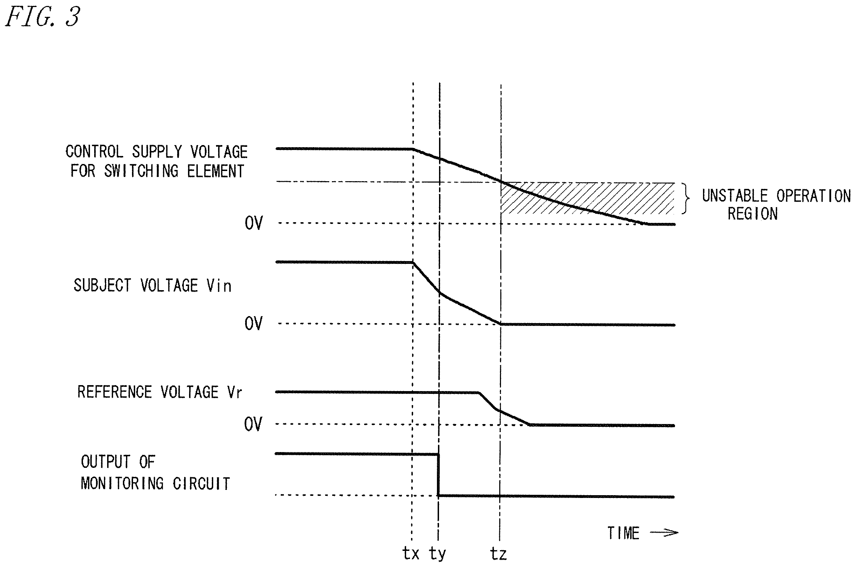

FIG. 3 is a diagram showing voltage variation in each section and variation in the output of the monitoring circuit 3. When abnormality occurs at a time tx, the control supply voltage for the switching element 71 or 72, that is, the output voltage of the output circuit 1b or 1c gradually drops, and then, at a time tz, enters an unstable operation region of the switching element, to be 0V eventually.

After the time tx, the subject voltage Vin based on the feedback voltage gradually drops to be 0V eventually. On the other hand, owing to the above-described operation of the regulator circuit 2, the reference voltage Vr is kept as it is for a while even after the abnormality occurs. Therefore, for example, at a time ty after the abnormality occurs, the subject voltage Vin becomes lower than the reference voltage Vr, and the output of the comparator 31 in the monitoring circuit 3 changes from H level to L level. By this change, the CPU 8 stops sending the gate signals to the respective driving couplers 5 and 6 for the switching elements 71 and 72. Therefore, the gate voltages from the driving couplers 5 and 6 to the switching elements 71 and 72 are lost, so that the switching elements 71 and 72 are turned off.

It is noted that at the above time ty, the control supply voltages for the switching elements 71 and 72 have somewhat dropped, but abnormal heat generation or erroneous operation does not occur on the switching elements 71 and 72 yet at this point of time. Conversely, the reference voltage Vr and the division ratio of the resistors R1 and R2 are set so that, before the possibility of occurrence of abnormal heat generation or erroneous operation of the switching elements 71 and 72 arises, the output of the monitoring circuit 3 will invert and thereby the abnormality can be detected.

As described above, even if the input voltage to the regulator circuit 2 has dropped, since the regulator circuit 2 essentially outputs the constant voltage reduced from the input voltage, the regulator circuit 2 continues to output the constant voltage until the input voltage becomes lower than the constant voltage. Therefore, the reference voltage does not vary. Accordingly, when the subject voltage Vin is lower than the reference voltage Vr, the switching elements 71 and 72 can be protected by stopping output of the control signals to the switching elements 71 and 72. Here, by using the output voltage of the regulator circuit 2 for the supply voltage for the CPU 8, the CPU 8 is allowed to continue to operate for a longer period, whereby the protecting operation can be performed more reliably. In addition, as previously described, without monitoring the voltage of each output circuit, the voltage monitoring of the entire switching power supply 1 can be performed based on the output voltage of the output circuit 1a used for the feedback control.

In addition, in the above embodiment, the case of abnormal drop in voltage has been described as an example. However, also in the case where voltage rises abnormally, the same effect can be obtained by only configuring the monitoring circuit (3) so as to detect abnormality when the subject voltage is higher than the reference voltage.

Specifically, another monitoring circuit 3 shown in FIG. 1 is provided in parallel and configured such that, in a normal state, the subject voltage Vin is lower than the reference voltage Vr, for example. Then, when the subject voltage Vin becomes higher than the reference voltage Vr due to abnormal rise in voltage, the output of the comparator 31 inverts and thereby the abnormal state is detected. Then, sending of the gate signals to the driving couplers 5 and 6 is stopped. The reference voltage Vr in this case is set such that the subject voltage Vin does not exceed the gate breakdown voltage of the IGBT, for example.

That is, according to such a power supply circuit, abnormality (drop or rise) in voltage can be reliably detected with a simple circuit configuration, whereby the switching elements can be protected. In the case where the switching elements are IGBTs composing a power conversion circuit such as an inverter circuit or a converter circuit, when the gate voltage as the control signal drops due to abnormal drop of the output voltage of the switching power supply, abnormal heat generation or switching malfunction of the IGBTs can occur. However, even in this case, by stopping supply of the gate voltage, such problems can be prevented from occurring. In addition, when the gate voltage as the control signal rises due to abnormal rise of the output voltage of the switching power supply, breakdown of the IGBTs can occur. However, even in this case, by stopping supply of the gate voltage, such a problem can be prevented from occurring.

It is noted that in the regulator circuit 2, the regulator may be provided in one stage, or depending on the input voltage or required load voltage, the regulators may be provided in three or more stages. In the case of a plurality of stages, by configuring them such that the later the stage is, the lower the constant voltage outputted from the stage is, a time can be easily secured until the output of the regulator in the last stage becomes lower than the constant voltage. That is, even if the output voltage of the switching power supply has abnormally dropped, the regulator in the last stage can keep its output of the constant voltage for a comparatively long time after occurrence of the drop.

It is noted that in the above embodiment, the switching elements 71 and 72 are IGBTs, but the same effect can be expected even by another type of switching element such as a MOSFET, whose switching state changes depending on the driving voltage.

### REFERENCE SIGNS LIST

- 1: switching power supply
- 1a: output circuit
- 2: regulator circuit
- 3: monitoring circuit
- 8: CPU (control apparatus)
- 71, 72: switching element (IGBT)

## Claims

1. A power supply circuit that supplies control supply voltage for giving a control signal to a switching element (71, 72), the power supply circuit comprising:
a switching power supply (1) including a first output circuit (1b, 1c) for supplying a control supply voltage to a control terminal of the switching element, and a second output circuit (1a) the switching power supply (1) uses the output voltage of the second output circuit (1a) for feedback control for keeping the output voltage of the second output circuit (1a) within a predetermined range, and thereby keeping the output voltage of the first output circuit (1b, 1c) within an allowable range; and
a monitoring circuit (3) that monitors the output voltage of the second output circuit (1a),
**characterized in that**:
there is provided a regulator circuit (2) that reduces the output voltage of the second output circuit (1a) to a predetermined constant voltage and outputs the constant voltage, and
the monitoring circuit (3) is configured such that a subject voltage (Vin) obtained from the output voltage of the second output circuit(1a) is higher than a reference voltage (Vr) obtained from the constant voltage when the control supply voltage is normal, and
the monitoring circuit (3) outputs a signal to a control apparatus (8) for stopping output of the control signal to the switching element (71, 72) when the subject voltage (Vin) becomes lower than the reference voltage (Vr) so that the switching elements (71,72) are switched OFF.

2. The power supply circuit according to claim 1, wherein the regulator circuit (2) is composed of regulators in a plurality of stages such that the later the stage is, the lower the constant voltage outputted from the stage is.

3. The power supply circuit according to claim 1 or 2, wherein the subject voltage (Vin) becomes lower than the reference voltage (Vr) before the control supply voltage for the switching element (71, 72) becomes lower than predetermined voltage that allows the switching element (71, 72) to normally operate.

4. A power supply circuit that supplies control supply voltage for giving a control signal to a switching element (71, 72), the power supply circuit comprising:
a switching power supply (1) including a first output circuit (1b, 1c) for supplying a control supply voltage to a control terminal of the switching element, and a second output circuit (1a), the switching power supply (1) uses the output voltage of the second output circuit (1a) for feedback control for keeping the output voltage of the second output circuit (1a) within a predetermined range, thereby keeping the output voltage of the first output circuit (1b, 1c) within an allowable range; and
a monitoring circuit (3) that monitors the output voltage of the second output circuit (1a),
**characterized in that**:
there is provided a regulator circuit (2) that reduces the output voltage of the second output circuit (1a) to a predetermined constant voltage and outputs the constant voltage, and
the monitoring circuit (3) is configured such that a subject voltage (Vin) obtained from the output voltage of the second type of output circuit (1a) is lower than a reference voltage (Vr) obtained from the constant voltage when the control supply voltage is normal, and
the monitoring circuit (3) outputs a signal to a control apparatus (8) for stopping output of the control signal to the switching element (71, 72) when the subject voltage (Vin) becomes higher than the reference voltage (Vr) so that the switching elements (71, 72) are switched OFF.

5. The power supply circuit according to any one of claims 1-4, wherein the subject Voltage (Vin) and the reference voltage (Vr) are voltages as seen from a common GND potential on the output side of the switching power supply (1).

6. The power supply circuit according to claim 5, wherein as well as the subject voltage (Vin) and the reference voltage (Vr), a supply voltage for the control apparatus (8) is a voltage as seen from the GND potential.

7. The power supply circuit according to any one of claims 1-4, wherein output voltage of the regulator circuit (2) is used for the supply voltage (Vin) for the control apparatus (8).

8. The power supply circuit according to any one of claims 1-7, wherein the switching element (71, 72) is a plurality of voltage-driving-type elements composing a power conversion circuit.

## Patentansprüche

1. Stromversorgungsschaltung, welche eine Steuerversorgungsspannung zum Bereitstellen eines Steuersignals an ein Schaltelement (71, 72) liefert, die Stromversorgungsschaltung Folgendes umfassend:
eine Schaltstromversorgung (1), welche eine erste Ausgabeschaltung (1b, 1c) zum Liefern einer Steuerversorgungsspannung an einen Steueranschluss des Schaltelements und eine zweite Ausgabeschaltung (1a) umfasst, wobei die Schaltstromversorgung (1) die Ausgabespannung der zweiten Ausgabeschaltung (1a) zur Rückkoppelungssteuerung verwendet, um die Ausgabespannung der zweiten Ausgabeschaltung (1a) innerhalb eines vorgegebenen Bereichs zu halten und um dadurch die Ausgabespannung der ersten Ausgabeschaltung (1b, 1c) innerhalb eines zulässigen Bereichs zu halten; und
eine Überwachungsschaltung (3), welche die Ausgabespannung der zweiten Ausgabeschaltung (1a) überwacht,
**dadurch gekennzeichnet, dass**
eine Regulierschaltung (2) bereitgestellt wird, welche die Ausgabespannung der zweiten Ausgabeschaltung (1a) auf eine vorgegebene konstante Spannung reduziert und die konstante Spannung ausgibt, und
die Überwachungsschaltung (3) so konfiguriert ist, dass eine Subjektspannung (Vin), welche aus der Ausgabespannung der zweiten Ausgabeschaltung (1a) erhalten wird, höher ist als eine Referenzspannung (Vr), welche aus der konstanten Spannung erhalten wird, wenn die Steuerversorgungsspannung normal ist, und
die Überwachungsschaltung (3) ein Signal an eine Steuerungsvorrichtung (8) zum Stoppen der Ausgabe des Steuersignals an das Schaltelement (71, 72) ausgibt, wenn die Subjektspannung (Vin) niedriger wird als die Referenzspannung (Vr), so dass die Schaltelemente (71, 72) AUS geschaltet sind.

2. Stromversorgungsschaltung nach Anspruch 1, wobei die Regulierschaltung (2) derartig aus Reglern in mehreren Stufen besteht, dass je später die Stufe ist, desto niedriger ist die konstante Spannung, welche aus der Stufe ausgegeben wird.

3. Stromversorgungsschaltung nach Anspruch 1 oder 2, wobei die Subjektspannung (Vin) niedriger als die Referenzspannung (Vr) wird, bevor die Steuerversorgungsspannung für das Schaltelement (71, 72) niedriger wird als eine vorgegebene Spannung, welche dem Schaltelement (71, 72) ermöglicht, normal zu arbeiten.

4. Stromversorgungsschaltung, welche eine Steuerversorgungsspannung zum Bereitstellen eines Steuersignals an ein Schaltelement (71, 72) liefert, die Stromversorgungsschaltung Folgendes umfassend:
eine Schaltstromversorgung (1), welche eine erste Ausgabeschaltung (1b, 1c) zum Liefern einer Steuerversorgungsspannung an einen Steueranschluss des Schaltelements und eine zweite Ausgabeschaltung (1a) umfasst, wobei die Schaltstromversorgung (1) die Ausgabespannung der zweiten Ausgabeschaltung (1a) zur Rückkoppelungssteuerung verwendet, um die Ausgabespannung der zweiten Ausgabeschaltung (1a) innerhalb eines vorgegebenen Bereichs zu halten und um dadurch die Ausgabespannung der ersten Ausgabeschaltung (1b, 1c) innerhalb eines zulässigen Bereichs zu halten; und
eine Überwachungsschaltung (3), welche die Ausgabespannung der zweiten Ausgabeschaltung (1a) überwacht,
**dadurch gekennzeichnet, dass**
eine Regulierschaltung (2) bereitgestellt wird, welche die Ausgabespannung der zweiten Ausgabeschaltung (1a) auf eine vorgegebene konstante Spannung reduziert und die konstante Spannung ausgibt, und
die Überwachungsschaltung (3) so konfiguriert ist, dass eine Subjektspannung (Vin), welche aus der Ausgabespannung des zweiten Ausgabeschaltungstyps (1a) erhalten wird, niedriger ist als eine Referenzspannung (Vr), welche aus der konstanten Spannung erhalten wird, wenn die Steuerversorgungsspannung normal ist, und
die Überwachungsschaltung (3) ein Signal an eine Steuerungsvorrichtung (8) zum Stoppen der Ausgabe des Steuersignals an das Schaltelement (71, 72) ausgibt, wenn die Subjektspannung (Vin) höher wird als die Referenzspannung (Vr), so dass die Schaltelemente (71, 72) AUS geschaltet sind.

5. Stromversorgungsschaltung nach einem der Ansprüche 1 - 4, wobei die Subjektspannung (Vin) und die Referenzspannung (Vr) Spannungen sind, wie sie von einem gemeinsamen Massepotenzial auf der Ausgabeseite der Schaltstromversorgung (1) gesehen werden.

6. Stromversorgungsschaltung nach Anspruch 5, wobei genauso wie die Subjektspannung (Vin) und die Referenzspannung (Vr) auch eine Versorgungsspannung für die Steuerungsvorrichtung (8) eine Spannung ist, wie sie von dem Massepotenzial gesehen wird.

7. Stromversorgungsschaltung nach einem der Ansprüche 1 - 4, wobei eine Ausgabespannung der Regulierschaltung (2) für die Versorgungsspannung (Vin) für die Steuerungsvorrichtung (8) verwendet wird.

8. Stromversorgungsschaltung nach einem der Ansprüche 1 - 7, wobei das Schaltelement (71, 72) mehrere Elemente vom Spannungstreibertyp ist, welche eine Leistungsumwandlungsschaltung zusammensetzen.

## Revendications

1. Circuit d'alimentation électrique qui délivre une tension d'alimentation de commande pour fournir un signal de commande à un élément de commutation (71, 72), le circuit d'alimentation électrique comprenant :
une alimentation électrique de commutation (1) comprenant un premier circuit de sortie (1b, 1c) pour délivrer une tension d'alimentation de commande à une borne de commande de l'élément de commutation, et un deuxième circuit de sortie (1a),
l'alimentation électrique de commutation (1) utilise la tension de sortie du deuxième circuit de sortie (1a) pour une commande de rétroaction pour maintenir la tension de sortie du deuxième circuit de sortie (1a) dans une plage prédéterminée, et maintenir ainsi la tension de sortie du premier circuit de sortie (1b, 1c) dans une plage admissible ; et
un circuit de surveillance (3) qui surveille la tension de sortie du deuxième circuit de sortie (1a),
**caractérisé en ce que** :
un circuit régulateur (2) est prévu, qui réduit la tension de sortie du deuxième circuit de sortie (1a) à une tension constante prédéterminée et délivre en sortie la tension constante, et
le circuit de surveillance (3) est configuré de manière à ce qu'une tension objet (Vin) obtenue à partir de la tension de sortie du deuxième circuit de sortie (1a) soit supérieure à une tension de référence (Vr) obtenue à partir de la tension constante quand la tension d'alimentation de commande est normale, et
le circuit de surveillance (3) délivre en sortie un signal à un dispositif de commande (8) pour interrompre la délivrance en sortie du signal de commande à l'élément de commutation (71, 72) quand la tension objet (Vin) devient inférieure à la tension de référence (Vr) de manière à ce que les éléments de commutation (71, 72) soient commutés à l'état bloqué.

2. Circuit d'alimentation électrique selon la revendication 1, dans lequel le circuit régulateur (2) est composé de régulateurs dans une pluralité d'étages de manière à ce que plus l'étage est ultérieur, plus la tension constante délivrée en sortie à partir de l'étage est basse.

3. Circuit d'alimentation électrique selon la revendication 1 ou 2, dans lequel la tension objet (Vin) devient inférieure à la tension de référence (Vr) avant que la tension d'alimentation de commande pour l'élément de commutation (71, 72) devienne inférieure à une tension prédéterminée qui permet à l'élément de commutation (71, 72) de fonctionner normalement.

4. Circuit d'alimentation électrique qui délivre une tension d'alimentation de commande pour fournir un signal de commande à un élément de commutation (71, 72), le circuit d'alimentation électrique comprenant :
une alimentation électrique de commutation (1) comprenant un premier circuit de sortie (1b, 1c) pour délivrer une tension d'alimentation de commande à une borne de commande de l'élément de commutation, et un deuxième circuit de sortie (1a),
l'alimentation électrique de commutation (1) utilise la tension de sortie du deuxième circuit de sortie (1a) pour une commande de rétroaction pour maintenir la tension de sortie du deuxième circuit de sortie (1a) dans une plage prédéterminée, et maintenir ainsi la tension de sortie du premier circuit de sortie (1b, 1c) dans une plage admissible; et
un circuit de surveillance (3) qui surveille la tension de sortie du deuxième circuit de sortie (1a),
**caractérisé en ce que** :
un circuit régulateur (2) est prévu, qui réduit la tension de sortie du deuxième circuit de sortie (1a) à une tension constante prédéterminée et délivre en sortie la tension constante, et
le circuit de surveillance (3) est configuré de manière à ce qu'une tension objet (Vin) obtenue à partir de la tension de sortie du deuxième circuit de sortie (1a) soit inférieure à une tension de référence (Vr) obtenue à partir de la tension constante quand la tension d'alimentation de commande est normale, et
le circuit de surveillance (3) délivre en sortie un signal à un dispositif de commande (8) pour interrompre la délivrance en sortie du signal de commande à l'élément de commutation (71, 72) quand la tension objet (Vin) devient supérieure à la tension de référence (Vr) de manière à ce que les éléments de commutation (71, 72) soient commutés à l'état bloqué.

5. Circuit d'alimentation électrique selon l'une quelconque des revendications 1 à 4, dans lequel la tension objet (Vin) et la tension de référence (Vr) sont des tensions telles que vues à partir d'un potentiel GND commun sur le côté de sortie de l'alimentation électrique de commutation (1).

6. Circuit d'alimentation électrique selon la revendication 5, dans lequel tout comme la tension objet (Vin) et la tension de référence (Vr), une tension d'alimentation pour le dispositif de commande (8) est une tension telle que vue à partir du potentiel GND.

7. Circuit d'alimentation électrique selon l'une quelconque des revendications 1 à 4, dans lequel une tension de sortie du circuit régulateur (2) est utilisée pour la tension d'alimentation (Vin) pour le dispositif de commande (8).

8. Circuit d'alimentation électrique selon l'une quelconque des revendications 1 à 7, dans lequel l'élément de commutation (71, 72) est une pluralité d'éléments de type de commande par tension composant un circuit de conversion de puissance.
